Europäisches Patentamt

European Patent Office

Office européen des brevets

(19)

(11) **EP 1 015 746 B1**

(12) **EUROPÄISCHE PATENTSCHRIFT**

(45) Veröffentlichungstag und Bekanntmachung des Hinweises auf die Patenterteilung:
**10.09.2003** Patentblatt 2003/37

(21) Anmeldenummer: **98925436.2**

(22) Anmeldetag: **24.03.1998**

(51) Int Cl.⁷: $F02D\ 33/02$, $F02D\ 41/18$

(86) Internationale Anmeldenummer:
**PCT/DE98/00862**

(87) Internationale Veröffentlichungsnummer:
**WO 98/044250 (08.10.1998 Gazette 1998/40)**

(54) **EINRICHTUNG ZUM BESTIMMEN DER IN DIE ZYLINDER EINER BRENNKRAFTMASCHINE MIT LADER GELANGENDEN LUFT**

DEVICE FOR DETERMINING THE VOLUME OF AIR ENTERING THE CYLINDER OF AN INTERNAL COMBUSTION ENGINE WITH A SUPERCHARGER

DISPOSITIF POUR DETERMINER LE VOLUME D'AIR PENETRANT DANS LES CYLINDRES D'UN MOTEUR A COMBUSTION SURALIMENTE

(84) Benannte Vertragsstaaten:
**DE FR GB IT SE**

(30) Priorität: **01.04.1997 DE 19713379**
**17.09.1997 DE 19740914**

(43) Veröffentlichungstag der Anmeldung:
**05.07.2000** Patentblatt 2000/27

(73) Patentinhaber: **ROBERT BOSCH GMBH**
**70442 Stuttgart (DE)**

(72) Erfinder:
• **WILD, Ernst**
**D-71739 Oberriexingen (DE)**
• **REUSCHENBACH, Lutz**
**D-70469 Stuttgart (DE)**
• **BENNINGER, Nikolaus**
**D-71665 Vaihingen (DE)**
• **HESS, Werner**
**D-70499 Stuttgart (DE)**
• **ZHANG, Hong**
**D-93057 Regensburg (DE)**
• **MALLEBREIN, Georg**
**70825 Korntal-Münchingen (DE)**
• **VON HOFMANN, Harald**
**38165 Lehre (DE)**

(56) Entgegenhaltungen:
EP-A- 0 345 524          WO-A-96/32579
DE-A- 3 238 190          US-A- 5 191 789
US-A- 5 339 681

**Beschreibung**

Stand der Technik

Die Erfindung geht aus von der DE 32 38 190 C2. Diese betrifft ein "Elektronisches System zum Steuern bzw. Regeln von Betriebskenngrößen einer Brennkraftmaschine". Im einzelnen geht es darum, auf der Basis von Drehzahl und Luftdurchsatz im Ansaugrohr den Druck im Ansaugrohr zu bestimmen bzw. umgekehrt auf der Basis von Drehzahl und Druck den Luftdurchsatz. Die dort angegebene Lehre macht gezielt Gebrauch von physikalischen Zusammenhängen, die im Luftansaugrohr ablaufen, mit dem Ziel einer optimalen Steuerung der Brennkraftmaschine.

Weiterhin geht die Erfindung von der WO 96/32579 aus. Dort wird ein Verfahren zum modellgestützten Bestimmen der in die Zylinder einer Brennkraftmaschine gelangenden Luft beschrieben. Dazu wird ein physikalisches Modell aufgestellt, das die Verhältnisse im Ansaugsystem einer Brennkraftmaschine ohne Lader beschreibt, wobei als Eingangsgrößen des Modells der Öffnungsgrad der Drosselklappe, der Umgebungsdruck und die Ventilstellung repräsentierende Parameter herangezogen werden. Zusätzlich wird dort der aktuelle ermittelte Wert der in die Zylinder der Brennkraftmaschine gelangenden Luft zur Prädiktion von zukünftigen Werten herangezogen.

Die bekannten Systeme sind bei aufgeladenen Brennkraftmaschinen nicht ohne weiteres anwendbar, weil dort aufgrund der Ladungsvorgänge zusätzliche physikalische Gegebenheiten zu berücksichtigen sind.

Aufgabe der Erfindung ist es deshalb, eine Einrichtung zum Bestimmen der in die Zylinder einer Brennkraftmaschine mit Lader gelangenden Luft abhängig von Größen wie Drehzahl, Luftdurchsatz im Ansaugrohr, Drosselklappenstellungswerten und Temperatur zu schaffen, welche die physikalischen Vorgänge bei mit Lader betriebenen Brennkraftmaschinen umfassend berücksichtigt.

Gelöst wird diese Aufgabe mit einer Einrichtung nach dem Hauptanspruch.

Mit dieser erfindungsgemäßen Einrichtung ist es möglich, die physikalisch richtigen oder zumindest angenäherten Verhältnisse, die im Saugrohr einer Brennkraftmaschine mit Lader ablaufen, zu erfassen, und nachfolgend die Kraftstoffmengenbestimmung darauf abzustellen.

Weitere Vorteile der Erfindung ergeben sich in Verbindung mit den Unteransprüchen sowie dem im folgenden näher beschriebenen und erläuterten Ausführungsbeispiel der Erfindung.

Zeichnung

Ein Ausführungsbeispiel der Erfindung ist in der Zeichnung dargestellt und wird im nachfolgenden näher beschrieben und erläutert.

Es zeigen Figur 1 ein Übersichtsschaubild einer Brennkraftmaschine mit Lader, Figur 2 ein Blockdiagramm zur Bestimmung der relativen Füllung pro Hub (rl) ausgehend von normierten Größen für Drosselklappenwinkel, Temperatur der Ansaugluft vor Drosselklappe, Massesstrom über den Heißfilmluftmassenmesser (HFM) sowie der Drehzahl, Fig. 3 eine Blockdarstellung bezüglich der Berechnung des Massenstromes über die Drosselklappe.

Beschreibung des Ausführungsbeispieles

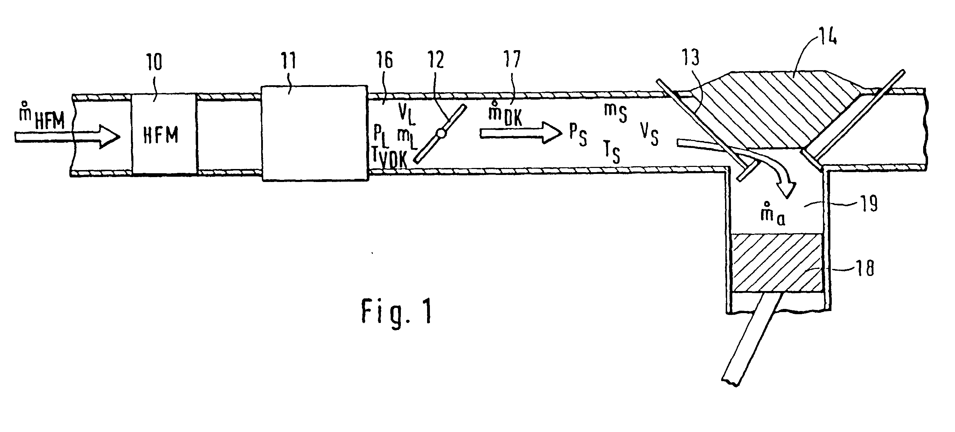

Figur 1 zeigt in grober Übersichtsdarstellung die Eingangsseite einer Brennkraftmaschine mit Lader. In Stromrichtung gesehen umfaßt das Luftansaugrohr einen Heißfilmluftmassenmesser 10 (HFM), einen Lader bzw. Verdichter 11, eine Drosselklappe 12 sowie ein Einlaßventil 13 der Brennkraftmaschine 14. Für das Verständnis der Erfindung ist noch ein Volumen 16 zwischen dem Lader 11 sowie der Drosselklappe sowie ein weiteres Volumen 17 zwischen Drosselklappe und Einlaßventil 13 wichtig. Die Brennkraftmaschine selbst besitzt pro Zylinder einen Kolben 18, dessen Tief-Stellung das Hubvolumen 19 charakterisiert.

Eine Betrachtung von Figur 1 verdeutlicht, daß die Verhältnisse im Ansaugrohr sich kennzeichnen lassen über

- eine Absauggleichung der Brennkraftmaschine (Luftfluß durch das Einlaßventil 13,
- eine Bilanzgleichung der Füllung im Saugrohr zwischen Drosselklappe und Einlaßventil (Volumen 17),
- eine Durchflußgleichung an der Drosselklappe 12, sowie
- eine Bilanzgleichung im Volumen 16 zwischen Lader 11 und Drosselklappe 12.

Dabei liegt den Gleichungen ein Zwei-Massen-Speicher-Modell zugrunde, wobei die zwei Massen-Speicher die Volumina vor und hinter der Drosselklappe (16, 17) angeben.

Als zweckmäßig hat sich erwiesen, daß für die Gleichungen normierte Werte Verwendung finden.

Im einzelnen geht es nun darum, Masseninhalte ml im Volumen 16 vor der Drosselklappe 12 sowie ms im Volumen vs 17 nach der Drosselklappe anzunehmen, die Masseninhalte in Drücke vor und nach der Drosselklappe umzurechnen, und auf der Basis dieser beiden Drücke Massenströme zu bestimmen, die ihrerseits wieder eine Aktualisierung der Masseninhalte erlauben. Dabei haben die einzelnen Berechnungen in Iterationsprozessen mit Annahmen für die Ausgangsdaten zu erfolgen.

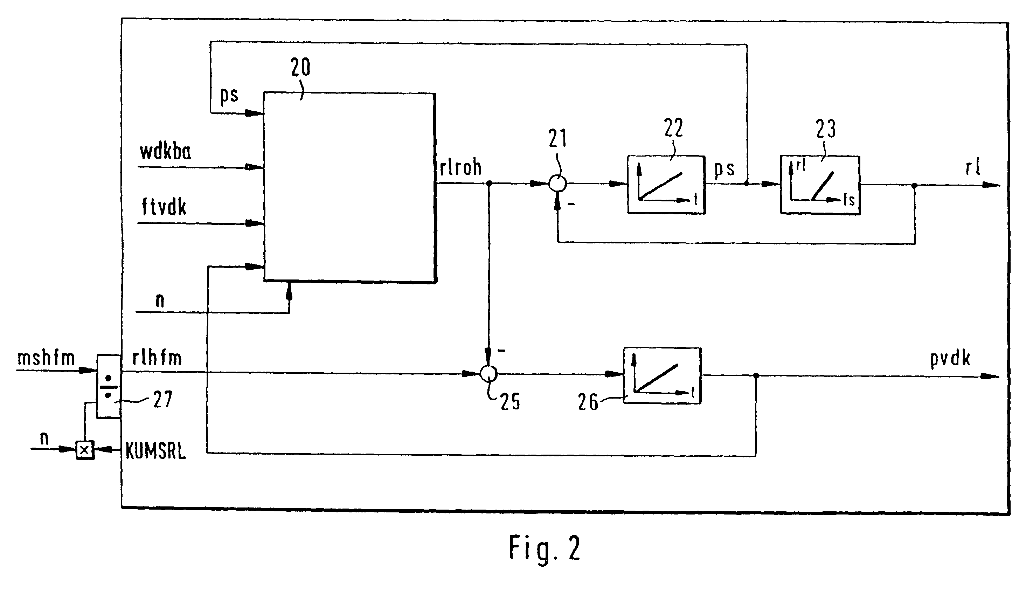

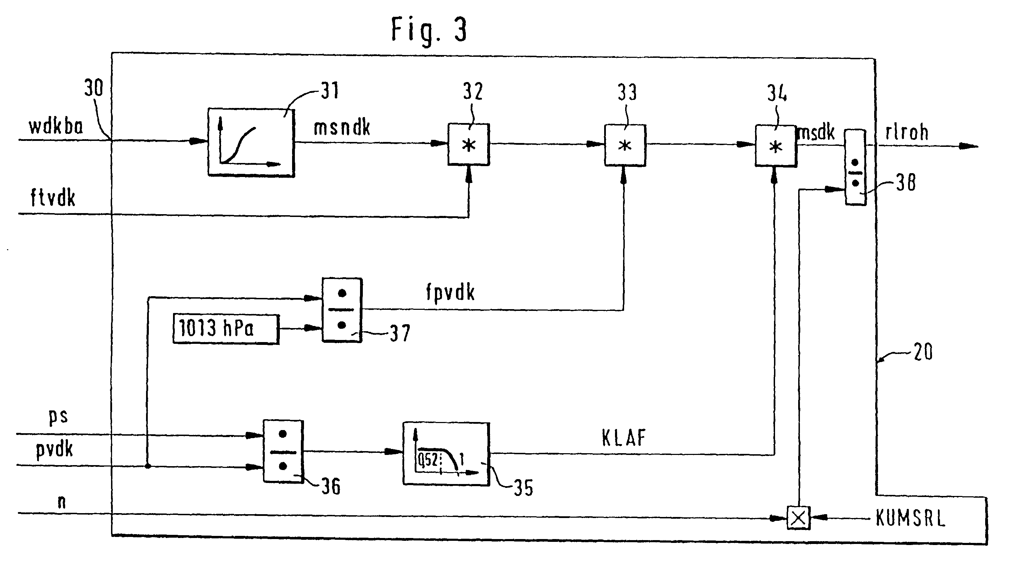

Einzelheiten bei den Berechnungsschritten zeigen die Fig. 2 und 3.

In Figur 2 ist ein Blockdiagramm zur Bestimmung der relativen Füllung pro Hub (rl) dargestellt, ausgehend von normierten Größen für Drosselklappenwinkel, Temperatur der Ansaugluft vor Drosselklappe, Massesstrom über den Heißfilmluftmassenmesser (HFM) sowie der Drehzahl. Mit 20 ist ein Block für die Berechnung des Drosselklappen-Durchflusses dargestellt, der die Durchflußgleichung über die Drosselklappe symbolisiert. Seine Eingangsgrößen sind die modellierte Größe des Saugrohrdruckes ps, des gemessenen Winkels der Drosselklappe bezogen auf ihren Anschlag (wdkba), einem normierten Faktor ftvdk, der sich auf die gemessene Temperatur der Ansaugluft vor der Drosselklappe bezieht, einem modellierten Druck (pvdk) vor der Drosselklappe sowie der Drehzahl (n). Ausgangsseitig ergibt sich die relative Luftmasse pro Hub über die Drosselklappe (rlroh). Es folgt eine Differenzbildungsstelle 21 und danach ein Integrator 22, wobei beide die Bilanzgleichung für den Druck im Saugrohr repräsentieren. Ausgangsseitig des Integrators 22 steht das Signal ps zur Verfügung, das sowohl Block 20 als auch einer Kennlinie 23 als Eingangsgröße dient. Die Kennlinie 23 stellt mit ihrem Zusammenhang zwischen ps und der relativen Füllung pro Hub rl die Absauggleichung des Brennraumes dar. Das Ausgangssignal rl wird ergänzend auf die Differenzbildungsstelle 21 zurückgeführt.

Die Bilanzgleichung im Volumen vor der Drosselklappe wird mittels einer Differenzbildungsstelle 25 zusammen mit einem nachfolgenden Integrator 26 realisiert. Die additive Eingangsgröße der Differenzbildungsstelle 25 ist ein Signal rlhfm der relativen Füllung über dem HFM, wobei dieses Signal einem Divisionsblock 27 entstammt, dessen Eingangsgrößen das HFM-Signal (Massenstrom HFM, mshfm) sowie ein mit einem Faktor KUMSRL (Kostante für Umrechnung von Massestrom in relative Luftfüllung im Brennraum) multipliziertes Drehzahlsignal n bilden. Die Ausgangsgröße des Integrators 26 stellt das Signal pvdk (Druck vor Drosselklappe) dar und bildet die entsprechende Eingangsgröße des Blockes 20.

Eine Realisierung des Blockes 20 von Fig. 2 ist in Fig. 3 dargestellt.

Einem Eingang 30 für die Größe wdkba folgt eine Ventilkennlinie 31, die ausgehend vom normierten Winkelsignal wdkba ein Signal bezüglich eines normierten Massenstromes msndk über die Drosselklappe bildet. Diese Normierung gilt u.a. für eine Lufttemperatur von 273 ° Kelvin sowie einem Druck vor Drosselklappe von 1013 hPa. Es folgen Multiplikationsstellen 32 mit dem weiteren Eingangssignal ftvdk, 33 mit dem Signal fpvdk sowie 34 mit dem Ausgangssignal einer Kennlinie 35, deren Eingangsgröße das Divisionsergebnis zwischen dem modellierten Druck ps sowie dem modelierten Druck pvdk ist (Block 36). Zweites Eingangssignal der Multiplikationsstelle 33 ist fpvdk als dem Ergebnis einer Division der Eingangsgröße pvdk dividiert durch einen Normdruck von 1013 hPa (Block 37). Das Ausgangssignal msdk (Massestrom über die Drosselklappe) der Multiplikationsstelle 34 erfährt nachfolgend in einem Block 38 eine Division mit dem Produkt aus der Drehzahl n sowie dem Faktor KUMSRL. Das Divisionsergebnis stellt das Signal rlroh als dem relativen Füllungswert über die Drosselklappe dar.

Aufgrund der physikalischen Gegebenheiten gilt im Stationärbetrieb rlhfm = rlroh = rl, d.h. der vom HFM gemessene Luftmassenstrom entspricht dem Massenstrom über die Drosselklappe und dem Masssestrom in den Brennraum. Im Instationärfall kommen die Integratoren zum Tragen, die die einzelnen Luftmassenspeicher nachbilden.

Im einzelnen kommen folgende Gleichungen zur Anwendung:

**- Absauggleichung der Brennkraftmaschine**
allgemein:

$$ma\_Punkt = (ps - pirg) * n * (VH/2) / (R * Ts)$$

mit

| | |
|---|---|
| ma_Punkt | = vom Brennraum abgesaugter Luftmassenstrom |
| ps | = Saugrohrdruck |
| pirg | = durch Restgas im Brennraum verursachter Partialdruck |
| n | = Drehzahl |
| VH | = Motorhubvolumen |
| Ts | = Gastemperatur im Saugrohr |

Umrechnung von Massenstrom ma_Punkt auf Luftmasse ma im Brennraum mit Division durch die Drehzahl n:

ma = Luftmasse im Brennraum
= ma_Punkt/n

$$= (ps - pirg) * (VH/2)/(R * Ts)$$

Für das Steuergerät wird mit normierten Größen gearbeitet: Normluftmasse im Brennraum

$$m\_norm = (Pn * VH/2)/(R * Tn)$$

Definition von rl als der relativen Luftfüllung im Brennraum:

$$rl = ma / m\_norm$$

$$= (ps - pirg)* Tn / (Pn * Ts)$$

unter den Normbedingungen: Tn =273K, Pn = 1013hPa mit

fupsrl = Faktor für Umrechnung von Druck im Saugrohr in relative Luftfüllung im Brennraum
   = Tn/(pn * Ts)

ergibt sich die Absauggleichung in Steuergeräte-Größen zu:

$$rl = (ps - pirg) * fupsrl$$

-  **Bilanzgleichung für die Füllung im Saugrohr**
(Volumen 17)
allgemein (realisiert durch die Additionsstelle 21 mit nachfolgendem Integrator 22):

$$d(ms)/dt = mdk\_Punkt - ma\_Punkt$$

Mit normierten Steuergrößen

$$d(ms/m\_norm)/dt = (mdk\_Punkt - ma\_Punkt)/m\_norm$$

und

rl_Punkt  = ma_Punkt/m_norm und
rlroh_Punkt = mdk_Punkt/m_norm

gilt:

$$d(ms/m\_norm)/dt = rlroh\_Punkt - rl\_Punkt$$

Den Zusammenhang zwischen Luftmasse ms im Saugrohr und dem Saugrohrdruck ps liefert die Gasgleichung

$$ps * Vs = ms * R * Ts$$

Aufgelöst nach ms folgt

$$ms = (ps * Vs) / (R * Ts)$$

Bezogen auf Normmasse ergibt sich

$$ms/m\_norm =$$

$$((ps * Vs) / (R * Ts))*((R * Tn)/( Pn * VH/2))$$

$$= (ps * Vs * Tn) / (Pn * VH/2 *Ts)$$

Eingesetzt in die normierte Bilanzgleichung gilt

$$d*((ps*Vs*Tn)/(Pn*VH/2*Ts))/dt =$$

$$(rlroh\_Punkt - rl\_Punkt)$$

daraus folgt:

$$d*ps/dt =$$

$$(rlroh\_Punkt - rl\_Punkt) * ((VH/2*Ts*Pn)/(Vs*Tn))$$

Mit

$$rl\_Punkt = rl * n$$

und

$$rlroh\_Punkt = rlroh * n$$

ergibt sich

$$d*ps/dt = ((VH/2*Ts*Pn*n)/(Vs*Tn))* (rlroh - rl)$$

Schließlich erhält man mit der Substitution

KIS     = Integrationskonstante für Saugrohrmodell
        = (VH/2*Ts*Pn*n)/(Vs*Tn)

die Steuergeräte-Gleichung in Differentialform

$$d*ps/dt = KIS * (rlroh - rl)$$

und in Integralform

$$ps = KIS * Integral ((rlroh - rl)* dt$$

-    **Durchflußgleichung für die Drosselklappe**
(Block 20, Einzelelemente der Fig. 3)
allgemein:

$$msdk(wdkba) =$$

$$pvdk*(1/(R*Tvdk))**(1/2)*Adk(wdkba)*my*Xi(Ps/pvdk)*k$$

mit

| | |
|---|---|
| msdk: | Massenstrom über die Drosselklappe |
| wdkba: | Drosselklappenwinkel bezogen auf Anschlag |
| pvdk: | Druck vor Drosselklappe |
| Tvdk: | Temperatur vor Drosselklappe |
| Adk: | Öffnungsquerschnitt der Drosselklappe |
| my: | Reibungsbeiwert |
| Xi: | Ausflußkennlinie |

Die Drosselklappe wird abhängig vom Drosselklappenwinkel unter Normbedingungen vermessen:

$$msndk(wdkba) =$$

$$pn*(1/(R*Tn))**(1/2)*Adk(wdk)*my*Xi(Psn/pvdk)*k$$

Der Quotient msdk(wdkba) / msndk(wdkba) aus beiden Gleichungen ergibt mit den Substitutionen

| | |
|---|---|
| fpvdk | = pvdk / Pn |
| ftvdk | = (Tn/Tvdk)**(1/2) |
| KLAF | = Xi(ps/pl) / Xi(psn/pl) |
| psn | = Normdruck hinter der Drosselklappe |

die Abhängigkeit:

$$msdk(wdkba) = msndk(wdkba) * ftvdk * fpvdk * KLAF$$

Damit ergibt sich der Wert für rlroh am Ausgang der Divisionsstelle 38 von Fig. 3 zu

$$rlroh = msdk/(n* KUMSRL)$$

mit

KUMSRL    = Umrechnungskonstante

- **Bilanzgleichung im Volumen 16 zwischen Drosselklappe und Lader**
  (Additionsstelle 25 und Integrator 26 von Fig. 3 ) allgemein:

$$d(ml)/dt = mhfm\_Punkt - mdk\_Punkt$$

Mit normierten Steuergrößen gilt

$$d(ml/m\_norm)/dt = (mhfm\_Punkt - mdk\_Punkt)/m\_norm$$

Wird

$$rlhfm\_Punkt = mhfm\_Punkt/mnorm$$

und

$$rlroh\_Punkt = mdk\_Punkt/m\_norm$$

gesetzt, folgt:

$$d(ml/m\_norm)/dt = rlhfm\_Punkt - rlroh\_Punkt$$

Den Zusammenhang zwischen Luftmasse ml im Ladevolumen und dem Ladedruck pl liefert die Gasgleichung

$$pl * Vl = ml * R * Tl$$

Aufgelöst nach ml folgt

$$ml = (pl * Vl)/(R * Tl)$$

Bezogen auf Normmasse ergibt sich

$$ml/m\_norm =$$

$$((pl * Vl)/(R * Tl)) * ((R * Tn)/(Pn * VH/2))$$

$$= (pl * Vl * Tn)/(Pn * VH/2 *Tl)$$

Eingesetzt in die normierte Bilanzgleichung

$$d(ml/m\_norm)/dt = rlroh\_Punkt - rl\_Punkt$$

und aufgelöst nach d(pl)/dt folgt

$$d(pl)/dt =$$

$$(rlroh\_Punkt - rl\_Punkt)/(VH/2*Tl*Pn)/(Vl * Tn)$$

Mit rlhfm_Punkt = rlhfm * n
und rlroh_Punkt = rlroh * n
sowie der Substitution

KIL    = Integrationskonstante für Ladevolumen
       = (VH/2 * Tl * Pn * n) / (Vl * Tn)

erhält man die Steuergeräte-Gleichung in Differentialform

$$d(pl)/dt = KIL * (rlhfm - rlroh)$$

und in Integralform

$$pl = KIL * Integral (rlhfm - rlroh )* dt$$

**EP 1 015 746 B1**

**Patentansprüche**

1. Verfahren zum iterativen Bestimmen der in die Zylinder einer Brennkraftmaschine mit Lader gelangenden relativen Füllung pro Hub rl, wobei die relative Füllung pro Hub rl aus dem Saugrohrdruck ps mittels einer Absauggleichung der Brennkraftmaschine zur Darstellung des Zusammenhangs zwischen der relativen Füllung pro Hub rl und dem Saugrohrdruck ps ermittelt wird, wobei der Saugrohrdruck ps mittels einer Bilanzgleichung der Füllung im Saugrohr aus einer Differenz der relativen Luftmasse pro Hub über die Drosselklappe rlroh und eines vorherigen Wertes für die relative Füllung pro Hub rl durch Integration ermittelt wird, wobei die relative Luftmasse pro Hub über die Drosselklappe rlroh mittels einer Durchflussgleichung an der Drosselklappe durch Division eines Massenstroms über die Drosselklappe msdk durch die Drehzahl n ermittelt wird, wobei der Massenstrom über die Drosselklappe msdk in Abhängigkeit eines vorherigen Wertes für den Saugrohrdruck ps, eines normierten Wertes für den Drosselklappenwinkel wdkba, einer Temperatur der Ansaugluft vor der Drosselklappe ftvdk und eines Druckes vor der Drosselklappe pvdk ermittelt wird, wobei der Druck vor der Drosselklappe pvdk mittels einer Bilanzgleichung im Volumen zwischen Drosselklappe und Lader aus einer Differenz der in die Brennkraftmaschine einströmenden Luftmasse rlhfm und einem vorherigen Wert der relativen Luftmasse über der Drosselklappe rlroh durch Integration ermittelt wird.

2. Verfahren nach Anspruch 1, **dadurch gekennzeichnet, dass** den Gleichungen ein Zwei-Massen-Speicher-Modell zugrunde liegt und eine erste Masse durch die Luftmasse im Volumen vor der Drosselklappe (12) und eine zweite Masse durch die Luftmasse im Volumen nach der Drosselklappe (12) gebildet ist.

3. Verfahren nach einem der vorherigen Ansprüche, **dadurch gekennzeichnet, dass** für die einzelnen Berechnungen in den Iterationsprozessen Annahmen für die Ausgangsdaten erfolgen.

4. Verfahren nach einem der vorherigen Ansprüche, **dadurch gekennzeichnet, dass** im Rahmen der Berechnung des Drosselklappendurchflusses mit Hilfe der Durchflussgleichung an der Drosselklappe (20) zwei modellierte Druckwerte Verwendung finden, die sich aus der Bilanzgleichung im Volumen vor der Drosselklappe (25,26) und aus der Bilanzgleichung im Saugrohrvolumen (17,21,22) ergeben.

**Claims**

1. Method for iteratively determining the relative fill per stroke rl reaching the cylinders of an internal combustion engine with a supercharger, the relative fill per stroke rl being determined from the induction pipe pressure ps by means of an extraction equation of the internal combustion engine for representing the relationship between the relative fill per stroke rl and the induction pipe pressure ps, the induction pipe pressure ps being determined by integration by means of a balance equation of the fill in the induction pipe from a difference between the relative air mass per stroke via the throttle valve rlroh and a previous value for the relative fill per stroke rl, the relative air mass per stroke via the throttle valve rlroh being determined by means of a flow equation at the throttle valve by dividing a mass flow via the throttle valve msdk by the speed n, the mass flow via the throttle valve msdk being determined as a function of a previous value for the induction pipe pressure ps, a normalized value for the throttle valve angle wdkba, a temperature of the induction air upstream of the throttle valve ftvdk and a pressure upstream of the throttle valve pvdk, the pressure upstream of the throttle valve pvdk being determined by integration by means of a balance equation in the volume between the throttle valve and supercharger from a difference between the air mass rlhfm flowing into the internal combustion engine and a previous value of the relative air mass via the throttle valve rlroh.

2. Method according to Claim 1, **characterized in that** the equations are based on a two-mass storage model, and a first mass is formed by the air mass in the volume upstream of the throttle valve (12), and a second mass is formed by the air mass in the volume downstream of the throttle valve (12).

3. Method according to one of the preceding claims, **characterized in that** assumptions relating to the output data are made for the individual calculations in the iteration processes.

4. Method according to one of the preceding claims, **characterized in that** use is made in the context of the calculation of the throttle valve throughflow, with the aid of the flow equation at the throttle valve (20), of two modelled pressure values which are yielded from the balance equation in the volume upstream of the throttle valve (25, 26) and from the balance equation in the induction pipe volume (17, 21, 22).

**Revendications**

1. Procédé, en vue de la détermination itérative du remplissage relatif pour chaque course (rl) pénétrant dans les cylindres d'un moteur à combustion suralimenté, selon lequel: le remplissage relatif pour chaque course (rl) est déterminé à partir de la pression dans le tuyau d'aspiration (ps) au moyen d'une équation d'aspiration du moteur à combustion, équation qui représente la corrélation entre le remplissage relatif pour chaque course (rl) et la pression dans le tuyau d'aspiration (ps); ladite pression ps est déterminée par intégration au moyen d'une équation de bilan du remplissage dans le tuyau d'aspiration à partir d'une différence entre la masse relative d'air pour chaque course passant par le volet d'étranglement (rlroh) et une valeur précédente pour le remplissage relatif pour chaque course (rl); la masse relative d'air pour chaque course passant par le volet d'étranglement (rlroh) est déterminée au moyen d'une équation de passage au voisinage du volet d'étranglement, par division d'un flux massique passant par le volet (msdk) par la vitesse de rotation (n) : le flux massique passant par le volet d'étranglement (msdk) est déterminé en fonction d'une valeur précédente de la pression dans le tuyau d'aspiration (ps), d'une valeur normalisée de l'angle du volet d'étranglement (wdkba), d'une température de l'air d'aspiration à l'avant du volet (ftvdk) et d'une pression à l'avant du volet (pvdk); la pression à l'avant du volet d'étranglement (pvdk) est déterminée par intégration au moyen d'une équation de bilan dans le volume situé entre le volet et le compresseur à suralimentation, à partir d'une différence entre la masse d'air affluant à l'intérieur du moteur à combustion et une valeur précédente de la masse d'air relative passant par le volet (rlroh).

2. Procédé selon la revendication 1,
   **caractérisé en ce que**
   les équations sont fondées sur un modèle de réservoirs à deux masses, une première masse étant formée par la masse d'air se trouvant dans le volume situé à l'avant du volet d'étranglement (12) et une seconde masse étant formée par la masse d'air se trouvant dans le volume situé à l'arrière du volet d'étranglement (12).

3. Procédé selon l'une des revendications précédentes,
   **caractérisé en ce que**
   pour les divers calculs intervenant dans les processus d'itération, des hypothèses sont faites pour les données initiales.

4. Procédé selon l'une des revendications précédentes,
   **caractérisé en ce que**
   dans le cadre du calcul du passage par le volet d'étranglement à l'aide de l'équation de passage au voisinage du volet (20), sont utilisées deux valeurs de pression modelées qui résultent de l'équation de bilan dans le volume situé à l'avant du volet (25, 26) et de l'équation de bilan dans le volume du tuyau d aspiration (17, 21, 22).

Fig. 1

Fig. 2

# Fig. 3